(19)

(11) **EP 3 516 638 B1**

(12) **EUROPÄISCHE PATENTSCHRIFT**


(45) Veröffentlichungstag und Bekanntmachung des Hinweises auf die Patenterteilung:
**24.01.2024 Patentblatt 2024/04**

(21) Anmeldenummer: **17768357.0**

(22) Anmeldetag: **22.08.2017**

(51) Internationale Patentklassifikation (IPC):
***G08G 1/00*** *(2006.01)* ***G05D 1/02*** *(2020.01)*
***G08G 1/16*** *(2006.01)* ***B60W 30/165*** *(2020.01)*
***B60W 30/16*** *(2020.01)* ***B60W 30/18*** *(2012.01)*

(52) Gemeinsame Patentklassifikation (CPC):
**G08G 1/162; B60W 30/16; B60W 30/165; B60W 30/18109; G05D 1/0293; G08G 1/22;**
B60W 2520/105; B60W 2554/80; B60W 2556/65; B60W 2754/10; G05D 2201/0213

(86) Internationale Anmeldenummer:
**PCT/EP2017/001002**

(87) Internationale Veröffentlichungsnummer:
**WO 2018/054520 (29.03.2018 Gazette 2018/13)**


(54) **VERFAHREN ZUM ERMITTELN EINES DYNAMISCHEN FAHRZEUG-ABSTANDES ZWISCHEN EINEM FOLGEFAHRZEUG UND EINEM VORDERFAHRZEUG EINES PLATOONS**

METHOD FOR DETERMINING A DYNAMIC VEHICLE DISTANCE BETWEEN A FOLLOWING VEHICLE AND A PRECEDING VEHICLE OF A PLATOON

PROCÉDÉ POUR DÉTERMINER UN ÉCART DYNAMIQUE ENTRE VÉHICULES ENTRE UN VÉHICULE SUIVANT ET UN VÉHICULE PRÉCÉDENT D’UN CONVOI


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2016 DE 102016011325**

(43) Veröffentlichungstag der Anmeldung:
**31.07.2019 Patentblatt 2019/31**



(73) Patentinhaber: **ZF CV Systems Europe BV**
**1170 Brussels (BE)**

(72) Erfinder:
- **BROLL, Niklas**
**30952 Ronnenberg (DE)**
- **DIECKMANN, Thomas**
**30982 Pattensen (DE)**
- **WOLF, Thomas**
**30890 Barsinghausen (DE)**

(74) Vertreter: **Rabe, Dirk-Heinrich**
**ZF CV Systems Hannover GmbH**
**Am Lindener Hafen 21**
**30453 Hannover (DE)**



(56) Entgegenhaltungen:
**WO-A1-2016/134770** **DE-A1-102010 013 647**
**DE-A1-102012 002 695** **US-A1- 2009 212 935**



EP 3 516 638 B1


Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Ermitteln eines dynamischen Fahrzeug-Abstandes zwischen einem Folgefahrzeug und einem Vorderfahrzeug eines Platoons

In einem Platoon oder einem Konvoi aus mehreren hintereinanderfahrenden Fahrzeugen, vorzugsweise Nutzfahrzeugen, wird herkömmlicherweise ein Fahrzeug-Abstand fest eingestellt in Abhängigkeit üblicher und fest voreingestellter Werte für die Bremsperformance und die Übertragungszeit von Informationen. Dadurch soll erreicht werden, dass in einem Worst-Case-Szenario eine von einem Vorderfahrzeug eingeleitete Notbremsung zu keinem Auffahrunfall mit einem dem Vorderfahrzeug folgenden Folgefahrzeug verursacht wird.

Dabei werden für das Vorderfahrzeug als fest eingestellte Werte entweder eine übliche oder mindestgeforderte maximale Vorderfahrzeug-Verzögerungen und für das Folgefahrzeug eine übliche oder eine schlechtest mögliche bzw. mindestgeforderte maximale Folgefahrzeug-Verzögerungen angenommen sowie eine übliche Übertragungszeit zur Übermittlung der Information, dass das Vorderfahrzeug eine Notbremsung eingeleitet hat. Dadurch soll sichergestellt werden, dass unter diesen Bedingungen die Fahrzeuge im Platoon noch sicher bremsen können. Gleichzeitig wird der Fahrzeug-Abstand derartig gewählt, dass der Treibstoffverbrauch minimiert und die Straßenauslastung optimiert werden kann. Dadurch wird sowohl die Sicherheit als auch die Effektivität gesteigert.

Nachteilig hierbei ist jedoch, dass reale Varianzen in der Übertragungszeit oder der jeweiligen maximalen Fahrzeug-Verzögerung nicht berücksichtigt werden. Dadurch kann es vorkommen, dass der tatsächliche Fahrzeug-Abstand nicht optimal eingestellt ist, da beispielsweise die mindestgeforderte Bremsperformance zu einem Fahrzeug-Abstand führt, der aufgrund der tatsächlichen Werte unterschritten werden könnte. Daher wird zwar die Sicherheit erhöht, die Effektivität allerdings nicht auf das Optimum gesteigert. Wird ein üblicher Wert der Bremsperformance fest voreingestellt, um die Effektivität zu steigern, das Vorderfahrzeug weist aber tatsächlich eine bessere Bremsperformance auf, kann es in einer Notbremssituation zu einem Auffahrunfall kommen, da der Fahrzeug-Abstand auf eine schlechtere Bremsperformance des Vorderfahrzeugs und ggf. eine bessere Bremsperformance des Folgefahrzeugs abgestimmt wurde.

Aus der DE102010013647A1 ist ein Verfahren zum Steuern von mehreren Fahrzeugen bekannt, die in einer Kolonne hintereinander herfahren, wobei ein Leitfahrzeug die Regelung der Abstände zwischen den Kolonnen-Fahrzeugen koordiniert. Dazu wird V-2-V-Kommunikation benutzt, um jedem Kolonnen-Fahrzeug eine Fahrzeugposition vorzugeben. Jedes Kolonnen-Fahrzeug, das nicht das Leitfahrzeug ist, wird auf der Basis der jeweiligen befohlenen Fahrzeugposition betrieben.

Aus der WO2016/134770A1 ist ebenfalls ein Verfahren zum Steuern der Abstände von dicht hintereinander herfahrenden Kolonnonen-Fahrzeugen bekannt. Dabei wird von einem Führungsfahrzeug ermittelt, ob ein drohendes Kollisionsrisiko gegeben ist. Falls ja, wird ein Indikator an die Folgefahrzeuge des Platoons gesendet. Die Folgefahrzeuge passen daraufhin den Fahrzeugabstand zum jeweiligen Vorderfahrzeug an.

Es ist daher Aufgabe der Erfindung, ein Verfahren zum Ermitteln eines dynamischen Fahrzeug-Abstandes anzugeben, mit dem in einfacher Weise ein Fahrzeug-Abstand ermittelt werden kann, der sowohl die Anforderungen an die Sicherheit bei einer möglichen Notbremsung erfüllt als auch den Kraftstoffverbrauch und die Straßenauslastung optimiert. Weiterhin ist Aufgabe der Erfindung, eine Steuereinrichtung zur Durchführung des Verfahrens bereitzustellen.

Diese Aufgabe wird durch ein Verfahren nach Anspruch 1 sowie eine Steuereinrichtung nach Anspruch 10 gelöst. Bevorzugte Weiterbildungen sind in den Unteransprüchen angegeben.

Erfindungsgemäß ist demnach vorgesehen, einen dynamischen Fahrzeug-Abstand zwischen einem Folgefahrzeug und einem Vorderfahrzeug eines Platoons in Abhängigkeit eines aktuellen Übertragungsweges und einer Bremswegdifferenz zu ermitteln. Ein aktueller Übertragungsweg ist hierbei definiert als der Weg, den das Folgefahrzeug zurücklegt, bis die Information, dass das Vorderfahrzeug eine Notbremsung eingeleitet hat, von dem Folgefahrzeug empfangen wird und dieses daraufhin ebenfalls eine Notbremsung einleitet. Die Bremswegdifferenz wird gebildet aus der Differenz zwischen einem Vorderfahrzeug-Bremsweg und einem Folgefahrzeug-Bremsweg, wenn beide Fahrzeuge in einer Notbremssituation jeweils mit einer maximalen Vorderfahrzeug-Verzögerung bzw. maximalen Folgefahrzeug-Verzögerung bremsen.

Zur Bestimmung des dynamischen Fahrzeug-Abstandes wird erfindungsgemäß eine aktuelle Übertragungszeit ermittelt sowie weiterhin die aktuelle maximale Vorderfahrzeug-Verzögerung des Vorderfahrzeuges und die aktuelle maximale Folgefahrzeug-Verzögerung des Folgefahrzeuges, um für die Berechnung des dynamischen Fahrzeug-Abstandes vorteilhafterweise auf tatsächlich vorliegende Werte zurückgreifen zu können.

Die aktuelle Übertragungszeit gibt hierbei die Zeit an, die zur Informationsübertragung zwischen dem Vorderfahrzeug und dem Folgefahrzeug tatsächlich benötigt wird, d. h. die Zeit zwischen dem Absenden einer Information, beispielsweise dass eine Notbremsung eingeleitet wurde, auf dem Vorderfahrzeug und dem Empfangen dieser Information auf dem Folgefahrzeug. Das Vorderfahrzeug kommuniziert hierbei mit dem Folgefahrzeug und umgedreht über eine drahtlose Datenkommunikation bzw. vehicle-to-vehicle-Kommunikation (V2V), die einen drahtlosen Austausch von V2V-Signalen erlaubt, um in einfacher Weise Daten zwischen den Fahrzeugen übermitteln zu können, die insbesondere eine Überwachung und Koordination des Platoons erlauben.

Der aktuelle Übertragungsweg ergibt sich dann aus der ermittelten aktuellen Übertragungszeit, vorzugsweise unter Berücksichtigung einer Totzeit, d.h. der Zeit zur Verarbeitung der übermittelten V2V-Signale und zur Ausgabe einer Bremsanforderung auf dem Folgefahrzeug, und einer Ansprechzeit, d.h. die Zeit ab der Ausgabe der Bremsanforderung bis an den Bremsen des Folgefahrzeuges tatsächlich ein Bremsdruck aufgebaut wird. D.h. der Übertragungsweg gibt den zurückgelegten Weg des Folgefahrzeuges zwischen der Einleitung einer Notbremsung durch das Vorderfahrzeug und der Einleitung einer Notbremsung durch das Folgefahrzeug an. Durch die Berücksichtigung der Totzeit und der Ansprechzeit können weitere Latenzen bis zur Einleitung einer Notbremsung berücksichtigt werden, so dass vorteilhafterweise eine exakte Bestimmung des dynamischen Fahrzeug-Abstandes ermöglicht wird.

Die Bremswegdifferenz wird entsprechend aus der Differenz der Bremswege für die aktuell ermittelte maximale Vorderfahrzeug-Verzögerung und die aktuelle maximale Folgefahrzeug-Verzögerung bestimmt, wobei dazu eine Verzögerungs-Differenz zwischen der maximalen Vorderfahrzeug-Verzögerung und der maximalen Folgefahrzeug-Verzögerung angesetzt werden kann.

Dadurch kann bereits der Vorteil erreicht werden, dass bei der Ermittlung des dynamischen Fahrzeug-Abstandes auf aktuelle Zusatzinformationen, d.h. auf eine aktuelle Übertragungszeit und auf eine aktuelle maximale Fahrzeug-Verzögerung zurückgegriffen wird und nicht auf vorab fest parametrierte bzw. fest gespeicherte Werte. Dadurch kann ein Fahrzeug-Abstand ermittelt werden, der dynamisch an die aktuelle Fahrsituation angepasst ist. Dadurch kann der Fahrzeug-Abstand sowohl unter Sicherheitsaspekten, d.h. beispielsweise für eine Notbremssituation, als auch in Abhängigkeit der Effizienz, d.h. zum Treibstoffsparen und zur optimierten Straßenauslastung, sehr genau eingestellt werden, insbesondere dann, wenn sich während der Fahrt einzelne Zusatzinformationen ändern, weil beispielsweise die fahrphysikalischen Eigenschaften variieren, z.B. von einer nassen zu einer trockenen Fahrbahn.

Denn der Fahrzeug-Abstand ist vorteilhafterweise derartig abgestimmt, dass bei einer vom Vorderfahrzeug mit der maximalen Vorderfahrzeug-Verzögerung eingeleiteten Notbremsung das Folgefahrzeug, das ebenfalls eine Notbremsung mit der maximalen Folgefahrzeug-Verzögerung einleitet, derartig zum Stehen kommt, dass es zu keinem Auffahrunfall kommt. Weiterhin ist der dynamische Fahrzeug-Abstand derartig eingestellt, dass der Treibstoffverbrauch verringert werden kann und die Straßenauslastung optimiert wird. Somit kann beiden Aspekten Rechnung getragen werden.

Der dynamische Fahrzeug-Abstand folgt hierbei vorteilhafterweise aus einer im Folgefahrzeug, beispielsweise in einer erfindungsgemäßen Steuereinrichtung hinterlegten Abstands-Kurve, die für einen ermittelten Übertragungsweg den Zusammenhang zwischen der Verzögerungs-Differenz und dem dynamischen Fahrzeug-Abstand angibt. Ist also aus der maximalen Vorderfahrzeug-Verzögerung und der maximalen Folgefahrzeug-Verzögerung die Verzögerungs-Differenz bekannt, kann der dynamische Fahrzeug-Abstand aus der entsprechenden Abstands-Kurve für den ermittelten Übertragungsweg abgelesen werden.

Vorteilhafterweise kann die maximale Vorderfahrzeug-Verzögerung des Vorderfahrzeuges über das V2V-Signal vom Vorderfahrzeug auf das Folgefahrzeug übertragen werden. D.h. das Vorderfahrzeug ermittelt beispielsweise in einer vorab durchgeführten Testbremsung mit voller Verzögerung die maximal zu erreichende Vorderfahrzeug-Verzögerung, die beispielsweise abhängig ist von einem aktuellen Vorderfahrzeug-Reibwert, einem aktuellen Vorderfahrzeug-Bremsbelag-Zustand, einem aktuellen Vorderfahrzeug-Bremsansprech-Verhalten, einem aktuellen Vorderfahrzeug-Reifenzustand, einem aktuellen Vorderfahrzeug-Bremsenzustand oder auch vom Wetter, und gibt diese maximal zu erreichende Vorderfahrzeug-Verzögerung drahtlos über das V2V-Signal über die drahtlose Datenkommunikation an das Folgefahrzeug weiter. Die maximal zu erreichende Vorderfahrzeug-Verzögerung kann während der Fahrt auch angepasst werden, beispielsweise in Abhängigkeit einer aktuellen Bremsentemperatur.

Das Folgefahrzeug kann dann daraus mit der eigenen maximalen Folgefahrzeug-Verzögerung den dynamischen Fahrzeug-Abstand ermitteln. Die maximale Folgefahrzeug-Verzögerung folgt dabei beispielsweise analog zum Vorderfahrzeug aus vorab durchgeführten Testbremsungen mit voller Verzögerung, ggf. angepasst an die Bremsentemperatur.

Somit kann auf aktuelle fahrphysikalische Parameter zurückgegriffen werden, die den Fahrzeug-Abstand beeinflussen und dieser somit an die aktuellen Gegebenheiten dynamisch angepasst werden, um sowohl einen sicheren als auch einen effizienten Abstand zwischen den entsprechenden Fahrzeugen im Platoon bzw. Konvoi aus mindestens dem Vorderfahrzeug und dem Folgefahrzeug einzustellen.

Ist für einen der Werte, d.h. die maximale Folgefahrzeug-Verzögerung, die maximale Vorderfahrzeug-Verzögerung oder die Übertragungszeit kein aktueller Wert verfügbar, weil beispielsweise die drahtlose Datenübertragung ausgefallen ist, können übliche Werte als aktuell angenommen werden, um den Fahrzeug-Abstand vorteilhafterweise zumindest für ein Worst-Case-Szenario sicher abstimmen zu können.

Eine erste Übertragungszeit wird erfindungsgemäß über einen Zeitstempel aus einer Absendezeit zu der das V2V-Signal von dem Vorderfahrzeug abgesendet wurde, und einer Empfangszeit, zu der das V2V-Signal auf dem Folgefahrzeug empfangen wird, ermittelt. Ergänzend kann auch ein Ortsstempel verwendet werden, um sicher zu gehen, dass es sich um das jeweilige Vorderfahrzeug handelt.

Dadurch kann bei bestehender drahtloser Datenkommunikation vorteilhafterweise eine sichere und eine einfache Ermittlung der aktuellen Übertragungszeit erfolgen, da der Zeitstempel ohnehin übertragen wird. In diesem Fall kann die Information über eine vom Vorderfahrzeug eingeleitete Notbremsung über das V2V-Signal auf das Folgefahrzeug übertragen werden. Die Ermittlung der ersten Übertragungszeit kann hierbei für jedes beliebige übertragene V2V-Signal erfolgen, da ohnehin ständig ein drahtloser Datenaustausch stattfindet.

Sollte es zu einem Ausfall der drahtlosen Datenkommunikation kommen, kann als aktuelle Übertragungszeit ein üblicher von Redundanzsystemen bestimmter Wert angenommen werden, wobei als Redundanzsysteme beispielsweise eine VLC-Lichtquelle und/oder eine Abstandssensorik in Frage kommen. Demnach kann statt der ersten Übertragungszeit eine zweite Übertragungszeit oder eine dritte Übertragungszeit angenommen werden. Ist die drahtlose Datenkommunikation ausgefallen, kann das Vorderfahrzeug beispielsweise über eine VLC- Lichtquelle die Information übertragen, dass eine Notbremsung eingeleitet wurde. D. h. die Übertragung der Information erfolgt unter Verwendung von Licht (Visible Light Communication), wobei die VLC-Lichtquelle dazu ein optisches Warnsignal im sichtbaren Spektrum ausgibt, wenn eine Notbremsung vom Vorderfahrzeug eingeleitet wird. Für das Erzeugen und das Erkennen, dass von einer VLC-Lichtquelle ein optisches Warnsignal ausgegeben wird, wird die zweite Übertragungszeit angenommen, d.h. die Zeit bis das Folgefahrzeug nach dem Vorderfahrzeug frühestens eine Notbremsung einleiten kann. D.h. der dynamische Fahrzeugabstand bzw. der Übertragungsweg wird dann in Abhängigkeit dieser zweiten Übertragungszeit sowie der Totzeit und der Ansprechzeit ermittelt.

Kann auch nicht auf die VLC-Lichtquelle zurückgegriffen werden, wird die dritte Übertragungszeit neben der Totzeit und der Ansprechzeit für den Übertragungsweg angenommen, wobei die dritte Übertragungszeit die Zeit zum Erkennen einer sich ändernden Relativgeschwindigkeit durch eine Abstandssensorik charakterisiert. D.h. es wird dann anhand der Abstandssensorik geprüft, ob das Vorderfahrzeug eine Notbremsung eingeleitet hat und infolge dessen nach der dritten Übertragungszeit eine Notbremsung eingeleitet.

Die Bremswegdifferenz wird dann vorzugsweise mit den zuletzt bekannten Werten für die maximale Vorderfahrzeug-Verzögerung und die Folgefahrzeug-Verzögerung ermittelt, falls der drahtlose Empfang eines V2V-Signals nicht mehr möglich ist.

Die Erfindung wird im Folgenden anhand der beiliegenden Zeichnung erläutert. Es zeigen:

Fig. 1 eine schematische Ansicht eines Platoons;

Fig. 2 eine schematische Darstellung eines Folgefahrzeuges und eines Vorderfahrzeuges;

Fig. 3 beispielhafte Abstands-Kurven zur Bestimmung eines dynamischen Fahrzeug-Abstandes;

Fig. 4 ein zeitlicher Verlauf einer Folgefahrzeug-Verzögerung und einer Vorderfahrzeug-Verzögerung bei einer durchgeführten Notbremsung; und

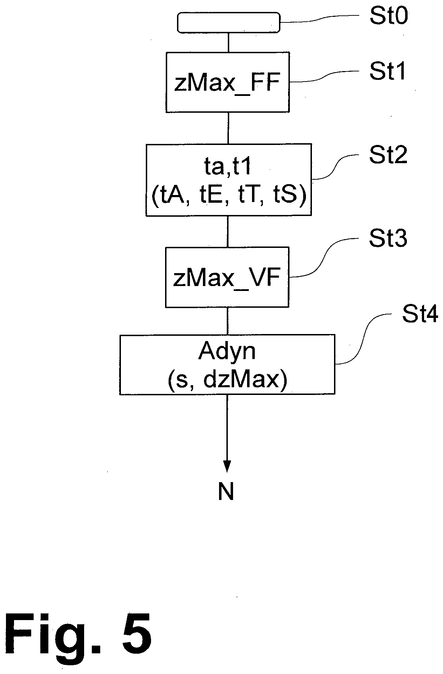

Fig. 5 ein Flussdiagramm des erfindungsgemäßen Verfahrens.

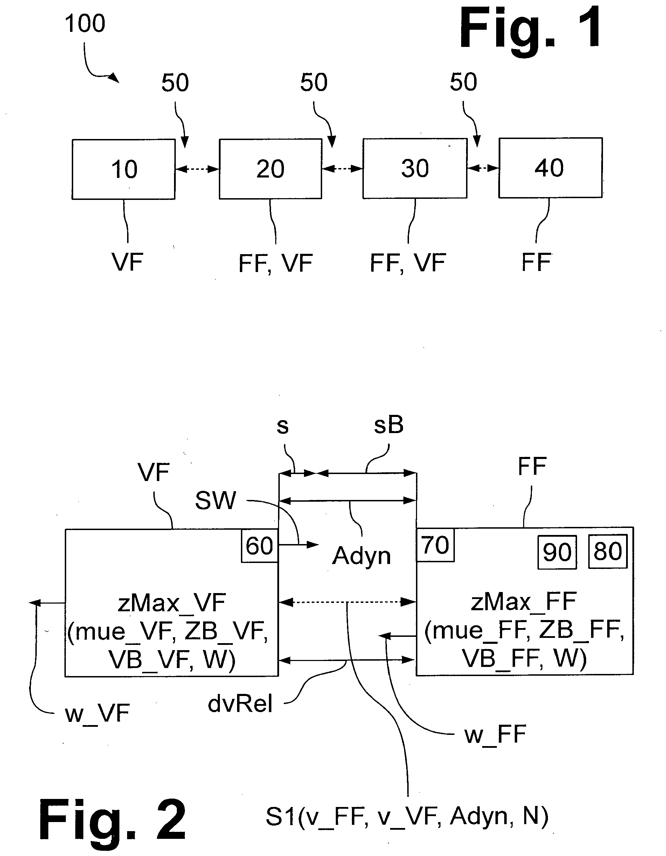

Gemäß Figur 1 ist ein Platoon 100 gezeigt, in dem mehrere Fahrzeuge 10, 20, 30, 40, vorzugsweise Personenkraftwagen und/oder Nutzfahrzeuge, insbesondere Sattelzüge oder LKWs mit Anhängern, hintereinander fahren.

Die Fahrzeuge 20, 30, 40 sind Folgefahrzeuge FF und die Fahrzeuge 10, 20, 30 sind Vorderfahrzeuge VF, wobei ein Folgefahrzeug FF einem vorausfahrendem Vorderfahrzeug VF gemäß Fig. 2 in einem bestimmten dynamischen Fahrzeug-Abstand Adyn folgt, wobei der dynamische Fahrzeug-Abstand Adyn eine räumliche Entfernung angibt. Der dynamische Fahrzeug-Abstand Adyn zwischen dem Folgefahrzeug FF und dem jeweiligen Vorderfahrzeug VF kann variieren, da vorgesehen ist, einen niedrigsten sicheren Fahrzeug-Abstand Adyn zum Vorderfahrzeug VF dynamisch einzustellen, d.h. angepasst an die jeweilige Fahrsituation der betroffenen Fahrzeuge 10, 20, 30, 40.

Der dynamische Fahrzeug-Abstand Adyn ist dazu derartig gewählt, dass ein Zusammenstoß zwischen den Fahrzeugen 10, 20, 30, 40 auch bei einer Notbremsung N des Vorderfahrzeuges VF in einer Gefahrensituation verhindert werden kann. Weiterhin ist der dynamische Fahrzeug-Abstand Adyn derartig gewählt, dass ein Treibstoffverbrauch und eine Straßenauslastung optimiert werden können.

Über eine drahtlose Datenkommunikation 50 (vehicle-to-vehicle Kommunikation, V2V) wird zwischen dem Vorderfahrzeug VF und dem jeweiligen Folgefahrzeug FF ständig ein V2V-Signal S1 übermittelt, um den Platoon 100 koordinieren bzw. überwachen zu können. Das V2V-Signal S1 überträgt hierbei insbesondere eine Fahrzeug-Geschwindigkeit v_VF, vFF der jeweiligen Fahrzeuge VF, FF, den dynamischen Fahrzeug-Abstand Adyn und auch die Information, ob eine Notbremsung N eingeleitet wurde. Die Übermittlung eines V2V-Signals S1 erfolgt innerhalb einer ersten Übertragungszeit t1 ausschließlich drahtlos.

Der dynamische Fahrzeug-Abstand Adyn wird von jedem Folgefahrzeug FF selbst ermittelt, wobei dieser derartig gewählt wird, dass bei einer Notbremsung N des Folgefahrzeuges FF mit einer für das Folgefahrzeug FF maximal möglichen Folgefahrzeug-Verzögerung zMax_FF ein Zusammenstoß mit dem Vorderfahrzeug VF, das eine Notbremsung N mit einer für das Vorderfahrzeug VF maximal möglichen Vorderfahrzeug-Verzögerung zMax_VF eingeleitet hat, vermieden werden kann. Der dynamische Fahrzeug-Abstand Adyn setzt sich dazu zusammen aus einem Übertragungsweg s und einer Bremswegdifferenz sB.

Der Übertragungsweg s gibt hierbei den Weg an, den das Folgefahrzeug FF zwischen dem Zeitpunkt t zurücklegt, an dem das Vorderfahrzeug VF beginnt zu bremsen und dem Zeitpunkt t, an dem das Folgefahrzeug FF beginnt zu bremsen, d.h. der Weg, der zur Übertragung der Information auf das Folgefahrzeug FF, dass vom Vorderfahrzeug VF eine Notbremsung N eingeleitet wurde, und der Umsetzung einer Notbremsung N durch das Folgefahrzeug FF benötigt wird. Der Übertragungsweg s ist hierbei beispielsweise abhängig von der ersten Übertragungszeit t1 zur Übertragung des V2V-Signals S1 sowie von einer Totzeit tT und einer Ansprechzeit tS, wobei die Totzeit tT die Zeit zur Verarbeitung der übermittelten V2V-Signale S1 auf dem Folgefahrzeug FF bis zur Ausgabe einer Bremsanforderung und die Ansprechzeit tS die Zeit ab der Ausgabe einer Bremsanforderung bis zum tatsächlichen Aufbau eines Bremsdruckes angibt.

Die Bremswegdifferenz sB ist von der maximalen Folgefahrzeug-Verzögerung zMax_FF und der maximalen Vorderfahrzeug-Verzögerung zMax_VF bzw. von einer Verzögerungs-Differenz dzMax = zMax_VF - zMax_FF abhängig und gibt die Differenz zwischen einem Vorderfahrzeug-Bremsweg w_VF und einem Folgefahrzeug-Bremsweg w_FF an, wenn beide Fahrzeuge VF, FF während einer Notbremsung N jeweils mit der maximalen Vorderfahrzeug-Verzögerung zMax_VF bzw. der maximalen Folgefahrzeug-Verzögerung zMax_FF bremsen. D.h. es wird berücksichtigt, wie stark das Folgefahrzeug FF im Vergleich zum Vorderfahrzeug VF bremsen kann. Denn kann beispielsweise das Vorderfahrzeug VF bei einer Notbremsung N stärker abbremsen als das Folgefahrzeug FF, ist ein größerer Fahrzeug-Abstand Adyn zu wählen als im umkehrten Fall, damit ein Auffahrunfall sicher vermieden werden kann.

Der dynamische Fahrzeug-Abstand Adyn folgt somit aus:

$$\mathrm{Adyn} = s + \mathrm{sB}\ (\mathrm{dzMax})$$

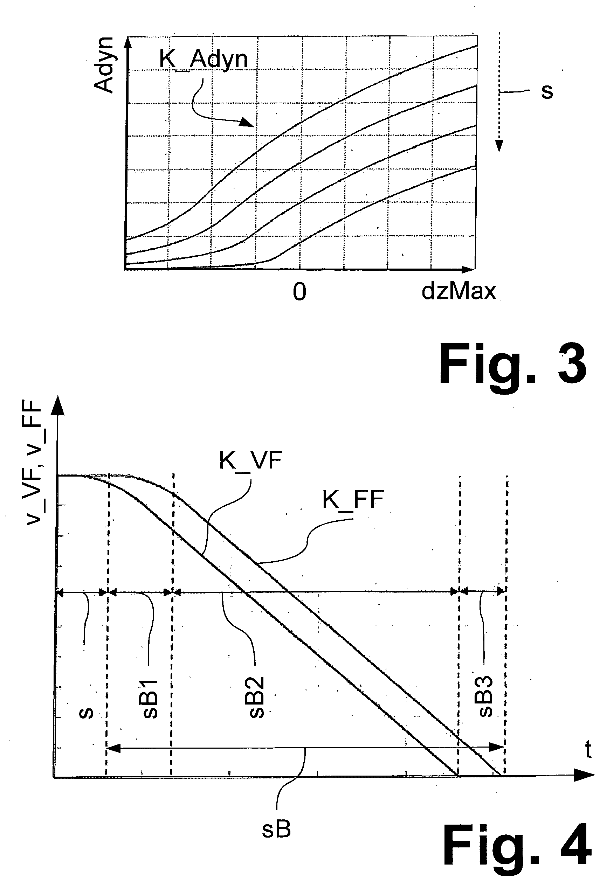

Lediglich beispielhaft ist der dynamische Fahrzeug-Abstand Adyn in Abhängigkeit unterschiedlicher Übertragungswege s gegen die Verzögerungs-Differenz dzMax in Fig. 3 in unterschiedlichen Abstands-Kurven K_Adyn aufgetragen, wobei der gestrichelte Pfeil angibt, dass der Übertragungsweg s in dieser Richtung für die jeweiligen Abstands-Kurven K_Adyn abfällt, d.h. je geringer der Übertragungsweg s desto geringer auch der dynamische Fahrzeug-Abstand Adyn. Somit folgt aus diesen Abstands-Kurven K_Adyn, wie hoch der dynamische Fahrzeug-Abstand Adyn bei einem bestimmten Übertragungsweg s in Abhängigkeit der ermittelten maximalen Folgefahrzeug-Verzögerung zMax_FF und der maximalen Vorderfahrzeug-Verzögerung zMax_VF zu wählen ist.

Derartige Abstands-Kurven K_A können beispielsweise geschwindigkeitsabhängig im Folgefahrzeug FF hinterlegt sein, so dass in Abhängigkeit der bekannten Werte für die maximale Folgefahrzeug-Verzögerung zMax_FF, die maximale Vorderfahrzeug-Verzögerung zMax_VF und den Übertragungsweg s der dynamische Abstand Adyn im Folgefahrzeug FF ermittelt werden kann.

Liegen weder der aktuelle Übertragungsweg s, weil beispielsweise keine erste Übertagungszeit t1 bekannt ist, noch die maximale Vorderfahrzeug-Verzögerung zMax_VF vor, werden für diese Größen übliche Werte die auf ein Worst-Case-Szenario abgestimmt sind.

Die tatsächliche bzw. aktuelle maximale Folgefahrzeug-Verzögerung zMax_FF des Folgefahrzeuge FF folgt aus fahrphysikalischen Zuständen des Folgefahrzeuges FF und kann beispielsweise in vorab durchgeführten Testbremsungen mit maximaler Verzögerung vom Folgefahrzeug FF ermittelt werden. Die maximale Folgefahrzeug-Verzögerung zMax_FF ist dabei beispielsweise abhängig von einem aktuellen Folgefahrzeug-Reibwert mue_FF, einem aktuellen Folgefahrzeug-Bremsbelag-Zustand ZB_FF, einem aktuellen Folgefahrzeug-Bremsansprech-Verhalten VB_FF oder weiteren aktuellen Fahrzeugparametern, die die Bremsperformance des jeweiligen Folgefahrzeuges FF angeben.

Zur Bestimmung des Übertragungsweges s zur optimierten Ermittlung des dynamischen Fahrzeug-Abstandes Adyn wird die erste Übertragungszeit t1 aktuell ermittelt, die im Normalbetrieb eines Platoons 100 als Zeit für eine Datenübertragung angenommen werden kann, um die Information einer eingeleiteten Notbremsung N zu übertragen.

Da ein ständiger drahtloser Datenaustausch über das V2V-Signal S1 stattfindet, kann die erste Übertragungszeit t1 während der Fahrt ständig aktuell ermittelt werden. Dies erfolgt erfindungsgemäß über einen Zeitstempel, der mit jedem V2V-Signal S1 vom Vorderfahrzeug VF übertragen wird und der eine Absendezeit tA angibt. Über die Empfangszeit tE auf dem Folgefahrzeug FF wird erfindungsgemäß aus der Differenz die tatsächliche erste Übertragungszeit t1 ermittelt.

Um zu plausibilisieren, dass das V2V-Signal S1 auch tatsächlich vom Vorderfahrzeug VF kommt, kann weiterhin ein Ortsstempel vorgesehen sein, aus dem die Bewegungsdaten des jeweiligen Vorderfahrzeuges VF folgen.

Aus der tatsächlichen erste Übertragungszeit t1 unter Berücksichtigung der Totzeit tT und der Ansprechzeit tS folgt nunmehr ein genauer Zeitversatz zwischen einem möglichen Beginn der Notbremsung N im Vorderfahrzeug VF und einem möglichen Beginn der Notbremsung N im Folgefahrzeug FF. Daraus folgt wiederum ein aktueller Wert für den Übertragungsweg s (t1, tT, tS), d.h. der Weg, den das Folgefahrzeug FF in dieser tatsächlichen ersten Übertragungszeit t1 unter Berücksichtigung einer Totzeit tT und einer Ansprechzeit tS zurücklegt.

Wird also vom Vorderfahrzeug VF eine Notbremsung N eingeleitet und diese Information über das V2V-Signal S1 an das Folgefahrzeug FF übertragen, wird das Folgefahrzeug FF frühestens nach Zurücklegen des Übertragungsweges s ebenfalls eine Notbremsung N einleiten, so dass dieser Übertragungsweg s bei der Bestimmung des dynamischen Fahrzeug-Abstandes Adyn beispielsweise gemäß Fig. 3 zu berücksichtigen ist.

Um auch eine optimierte Bremswegdifferenz sB unter Berücksichtigung der Bremsperformance des Vorderfahrzeuges VF (zMax_VF) und des eigenen Folgefahrzeuges FF (zMax_FF) bzw. deren Verzögerungs-Differenz dzMax = zMax_VF - zMax_FF zu ermitteln, wird auch eine tatsächliche bzw. aktuelle maximale Vorderfahrzeug-Verzögerung zMax_VF ermittelt; um nicht auf den auf das Worst-Case Szenario abgestimmten Wert annehmen zu müssen.

Dazu wird vom jeweiligen Vorderfahrzeug VF in analoger Weise wie auch vom Folgefahrzeug FF, beispielsweise in Testbremsungen mit voller Verzögerung, ermittelt, wie stark bzw. mit welcher maximalen Vorderfahrzeug-Verzögerung zMax_VF das jeweilige Vorderfahrzeug VF in einer Notbremssituation N tatsächlich bremsen könnte. Ab dem Zeitpunkt des Beitritts des jeweiligen Vorderfahrzeuges VF zum Platoon 100 wird diese ermittelte maximale Vorderfahrzeug-Verzögerung zMax_VF ständig über das V2V-Signal S1 ausgegeben und somit an die anderen Folgefahrzeuge FF des Platoons 100 übermittelt.

Das jeweilige Folgefahrzeug FF kann dann mit der für das eigene Folgefahrzeug FF aktuell festgestellten und mit der von dem Vorderfahrzeug VF aktuell festgestellten Bremsperformance zMax_FF, zMax_VF die Bremswegdifferenz sB aus der Verzögerungs-Differenz dzMax für den entsprechenden Übertragungsweg s gemäß Fig. 3 ermitteln.

Der dynamische Fahrzeug-Abstand Adyn ist für einen Übertragungsweg s beispielhaft in Fig. 4 anhand von Geschwindigkeitsverläufen K_VF, K_FF dargestellt, wobei aus dem jeweiligen Geschwindigkeitsverlauf K_VF, KFF durch Integration der jeweilige Bremsweg w_VF, w_FF folgt. Dabei wird angenommen, dass die maximale Vorderfahrzeug-Verzögerung zMax_VF gleich der maximalen Folgefahrzeug-Verzögerung zMax_FF ist, beispielsweise jeweils 5m/s2, da die Geschwindigkeitsverläufe K_VF, K_FF dieselbe maximale Steigung aufweisen. Die Geschwindigkeitsverläufe K_VF, K_FF bzw. die Bremswegdifferenz sB, die durch Integration aus den Geschwindigkeitsverläufen K_VF, K_FF bzw. deren Differenz folgt, lässt sich in unterschiedliche Brems-Teilwege sB1, sB2, sB3 unterteilen:
Ein erster Brems-Teilweg sB1 gibt hierbei den Weg an, den das Folgefahrzeug FF nach dem Übertragungsweg s zurücklegt, bis das Vorderfahrzeug VF und das Folgefahrzeug FF eine konstante Vorderfahrzeug-Verzögerung z_VF bzw. eine konstante Folgefahrzeug-Verzögerung z_FF aufweisen, wobei diese konstanten Verzögerungen z_VF, z_FF jeweils durch die maximale Vorderfahrzeug-Verzögerung zMax_VF bzw. die maximale Folgefahrzeug-Verzögerung zMax_FF vorgegeben werden.

Ein zweiter Brems-Teilweg sB2 gibt den Weg an, den das Folgefahrzeug FF zurücklegt, während sowohl das Vorderfahrzeug VF als auch das Folgefahrzeug FF konstant mit der maximalen Vorderfahrzeug-Verzögerung zMax_VF bzw. der maximalen Folgefahrzeug-Verzögerung zMax_FF bremsen.

Ein dritter Brems-Teilweg sB3 gibt in diesem Ausführungsbeispiel den Weg an, den das Folgefahrzeug FF ab dem Zeitpunkt t zurücklegt, ab dem sich das Vorderfahrzeug VF im Stillstand befindet, bis zu dem Zeitpunkt t, an dem das Folgefahrzeug FF (nach Bremsbeginn) die gleiche Geschwindigkeit wie das Vorderfahrzeug VF erreicht.

Liegen unterschiedliche Werte für die maximale Vorderfahrzeug-Verzögerung zMax_VF und die maximale Folgefahrzeug-Verzögerung zMax_FF vor, so sind die Steigungen der Geschwindigkeitsverläufe K_VF, K_FF entsprechend anzupassen, wobei es auch zu Schnittpunkten zwischen den jeweiligen Geschwindigkeitsverläufen K_VF, K_FF kommen kann. Dementsprechend ändern sich auch die Teil-Bremswege sB1, sB2, sB3 und somit auch der dynamische Fahrzeug-Abstand Adyn.

Der dynamische Fahrzeug-Abstand Adyn wird somit derartig festgelegt, dass bei einer Bremsung des Folgefahrzeuges FF mit den jeweiligen Teil-Bremswegen sB1, sB2, sB3 das Vorderfahrzeug VF nicht berührt wird, isf. auch der Übertragungsweg s berücksichtigt wird.

Wird also eine Notbremsung N des Vorderfahrzeuges VF festgestellt, kann mit dem dynamisch eingestellten Fahrzeug-Abstand Adyn sichergestellt werden, dass das Folgefahrzeug FF das Vorderfahrzeug VF nicht berührt, falls dieses unter den angenommen Bedingungen ebenfalls eine Notbremsung N nach beispielsweise der ersten Übertragungszeit t1 sowie der Totzeit tT und der Ansprechzeit tS einleitet.

Ergänzend zum V2V-Signal S1 kann das Vorderfahrzeug VF über eine VLC-Lichtquelle 60 auch ein optisches Warnsignal SW an das Folgefahrzeug FF ausgeben, wobei die VLC-Lichtquelle 60 ein Redundanzsystem zur drahtlosen Übertragung darstellt. D. h. die Übertragung einer Information vom Vorderfahrzeug VF auf das Folgefahrzeug FF erfolgt unter Verwendung von Licht (Visible Light Communication), wobei die VLC-Lichtquelle 60 dazu das optische Warnsignal SW im sichtbaren Spektrum ausgibt, wenn eine Notbremsung N vom Vorderfahrzeug VF eingeleitet wird. Das Folgefahrzeug FF erfasst ständig, ob die VLC-Lichtquelle 60 ein Warnsignal SW ausgibt und leitet bei Vorliegen des optischen Warnsignals SW eine Anforderung zur Durchführung einer Notbremsung N weiter, beispielsweise dann, wenn gerade kein V2V-Signal S1 erkannt werden kann. Der dynamische Fahrzeug-Abstand Adyn wird dann mit einem Übertragungsweg s ermittelt, für den eine zweite Übertragungszeit t2 angenommen wird, die das Erzeugen und Erkennen des Warnsignals SW berücksichtigt. Als maximale Vorderfahrzeug-Verzögerung zMax_VF wird der zuletzt über das V2V-Signal S1 übertragene Wert angenommen. Ist dieser nicht bekannt, wird wieder auf übliche Werte für ein Worst-Case-Szenario zurückgegriffen. Dadurch kann ein Ausfall der drahtlosen Datenkommunikation 50 abgefangen werden, und eine Notbremsung N des Vorderfahrzeuges VF über das optische Warnsignal SW erkannt werden.

Falls auch die Übertragung über die VLC-Lichtquelle 60 ausfällt, kann vom Folgefahrzeug FF ergänzend auch von einer Abstandssensorik 70, beispielsweise RADAR, LIDAR, Kamera, Bremslichterkennung, die ein weiteres Redundanzsystem darstellen, erkannt werden, wie hoch eine Änderung einer Relativgeschwindigkeit dvRel zwischen dem Folgefahrzeug FF und dem Vorderfahrzeug VF ist. Der dynamische Fahrzeug-Abstand Adyn wird dann mit einem Übertragungsweg s ermittelt, für den eine dritte Übertragungszeit t3 angenommen wird, die das Erkennen der Änderung der Relativgeschwindigkeit dvRel über die Abstandssensorik 70 berücksichtigt. Als maximale Vorderfahrzeug-Verzögerung zMax_VF wird der zuletzt über das V2V-Signal S1 übertragene Wert angenommen. Ist dieser nicht bekannt, wird wieder auf übliche Werte für ein Worst-Case-Szenario zurückgegriffen. In dem Fall wird ab einer bestimmten Änderung der Relativgeschwindigkeit dvRel eine Notbremsung N von Folgefahrzeug FF eingeleitet, da angenommen wird, dass auch das jeweilige Vorderfahrzeug VF eine Notbremsung N durchführt.

Wurde ein dynamischer Fahrzeug-Abstand Adyn im Folgefahrzeug FF ermittelt, wird dieser durch Ansteuerung eines Bremssystems 80 und/oder eines Antriebssystems 90 des Folgefahrzeuges FF eingestellt, um das Folgefahrzeug FF sicher im Platoon 100 zu steuern.

Gemäß Fig. 4 kann eine Abstandsbestimmung und Abstandseinstellung gemäß dem erfindungsgemäßen Verfahren wie folgt stattfinden.

In einem anfänglichen Schritt St0 startet das Verfahren beispielsweise nach Eintreten des Folgefahrzeuges FF in einen Platoon 100.

In einem ersten Schritt St1 wird eine eigene maximale Folgefahrzeug-Verzögerung zMax_FF aus fahrphysikalischen Zuständen des eigenen Folgefahrzeuges FF ermittelt, die beispielsweise in vorab durchgeführten Testbremsungen mit voller Verzögerung vom Folgefahrzeug FF bestimmt werden kann.

In einem zweiten Schritt St2 wird aus der Datenübertragung über das V2V-Signal S1 eine erste Übertragungszeit t1 unter Berücksichtigung der Absendezeit tA, zu der das V2V-Signal S1 vom Vorderfahrzeug VF abgesendet wurde, und der Empfangszeit tE, zu der das eigene Folgefahrzeug FF das V2V-Signal S1 empfangen hat, ermittelt. Ist die Datenübertragung gestört, wird die zweite Übertragungszeit t2 bei einer Verwendung des VLC-Warnlichts 60 oder die dritte Übertragungszeit t3 bei einer Verwendung der Abstandssensorik 70 wie oben beschrieben verwendet.

In einem dritten Schritt St3 wird die von dem Vorderfahrzeug VF ermittelte und über das V2V-Signal S1 übertragene maximale Vorderfahrzeug-Verzögerung zMax_VF erfasst, die beispielsweise in vorab durchgeführten Testbremsungen mit voller Verzögerung vom Vorderfahrzeug VF bestimmt werden kann..

in einem vierten Schritt St4 wird aus der jeweiligen Übertragungszeit t1, t2, t3 sowie der maximalen Vorderfahrzeug-Verzögerung zMax_VF und der maximalen Folgefahrzeug-Verzögerung zMax_FF bzw. der daraus folgenden Verzögerungs-Differenz dzMax = zMax_VF - zMax_FF gemäß Fig. 3 der dynamische Abstand Adyn ermittelt, der aus dem Übertragungsweg s, der abhängig von der ersten, zweiten oder dritten Übertragungszeit t1, t2, t3 sowie der Totzeiten tT und der Ansprechzeit tS ist, und der Bremswegdifferenz sB, die sich aus den Brems-Teilwegen sB1, sB2, sB3 zusammensetzt, folgt.

Im Folgenden kann der dynamische Fahrzeug-Abstand Adyn durch Ansteuern der Bremsen und/oder des Antriebs des Folgefahrzeuges FF eingestellt werden, um die Sicherheit im Platoon 100 bei gleichzeitiger Kraftstoffeinsparung zu erhöhen. Dadurch kann bei einer darauffolgenden, von dem Vorderfahrzeug VF eingeleiteten Notbremsung N mit der maximalen Vorderfahrzeug-Verzögerung zMax_VF, auf die das Folgefahrzeug FF ebenfalls mit einer Notbremsung N mit einer maximalen Folgefahrzeug-Verzögerung zMax_FF reagiert, ein Auffahrunfall vermieden werden.

Bezugszeichenliste (Bestandteil der Beschreibung)

| | |
|---|---|
| 10, 20, 30, 40 | Fahrzeuge des Platoons |
| 50 | drahtlose Datenkommunikation |
| 60 | VLC-Lichtquelle |
| 70 | Abstandssensorik |
| 80 | Bremssystem |
| 90 | Antriebssystem |
| 100 | Platoon |

| | |
|---|---|
| Adyn | dynamischer Abstand |
| dvRel | Relativgeschwindigkeit |

| | |
|---|---|
| dzMax | Verzögerungs-Differenz |
| FF | Folgefahrzeug |
| K_FF | Geschwindigkeitsverlauf des Folgefahrzeuges |
| K_VF | Geschwindigkeitsverlauf des Vorderfahrzeuges |
| mue_FF | Folgefahrzeug-Reibwert |
| mue_VF | Vorderfahrzeug-Reibwert |
| N | Notbremsung |
| t | Zeitpunkt |
| t1 | erste Übertragungszeit (V2V) |
| t2 | zweite Übertragungszeit (VLC) |
| t3 | dritte Übertragungszeit (Abstandssensorik) |
| tA | Absendezeit |
| tE | Empfangszeit |
| tT | Totzeit |
| tS | Ansprechzeit |
| S1 | V2V-Signal |
| s | Übertragungsweg |
| sB | Bremswegdifferenz |
| sB1, sB2, sB3 | Brems-Teilwege |
| sW | Warnsignal |
| v_FF | Folgefahrzeug-Geschwindigkeit |
| v_VF | Vorderfahrzeug-Geschwindigkeit |
| VB_FF | Folgefahrzeug-Bremsansprech-Verhalten |
| VB_VF | Vorderfahrzeug-Bremsansprech-Verhalten |
| VF | Vorderfahrzeug |
| W | Wetter |
| w_FF | Folgefahrzeug-Bremsweg |
| w_VF | Vorderfahrzeug-Bremsweg |
| ZB_FF | Folgefahrzeug-Bremsbelag-Zustand |
| ZB_VF | Vorderfahrzeug-Bremsbelag-Zustand |
| z_FF | Folgefahrzeug-Verzögerung |
| zMax_FF | maximale Fahrzeug-Verzögerung des Folgefahrzeuges |
| zMax_VF | maximale Fahrzeug-Verzögerung des Vorderfahrzeuges |
| z_VF | Vorderfahrzeug-Verzögerung |
| St0, St1, St2, St3, St4 | Schritte des Verfahrens |

## Patentansprüche

1. Verfahren zum Ermitteln eines dynamischen Fahrzeug-Abstandes (Adyn) zwischen einem Folgefahrzeug (FF) und einem Vorderfahrzeug (VF) eines Platoons (100), wobei zwischen dem Folgefahrzeug (FF) und dem Vorderfahrzeug (VF) ein V2V-Signal (S1) drahtlos übermittelt wird, mit mindestens den folgenden Schritten:

   - Ermitteln einer aktuellen maximalen Folgefahrzeug-Verzögerung (zMax_FF) des Folgefahrzeuges (FF) (St1);
   - Ermitteln einer aktuellen maximalen Vorderfahrzeug-Verzögerung (zMax_VF) des Vorderfahrzeuges (VF) (St3);
   - Ermitteln des dynamischen Fahrzeug-Abstandes (Adyn) in dem Folgefahrzeug (FF) aus einer Bremswegdifferenz (sB) (St4), wobei die Bremswegdifferenz (sB) eine Differenz zwischen einem durch die maximale Vorderfahrzeug-Verzögerung (zMax_W) vorgegebenen Vorderfahrzeug-Bremsweg (w_VF) und einem durch die maximale Folgefahrzeug-Verzögerung (zMax_FF) vorgegebenen Folgefahrzeug-Bremsweg (w_FF) angibt;

   **gekennzeichnet durch** den Schritt

   - Ermitteln einer aktuellen Übertragungszeit (t1, t2, t3) zur Übertragung der Information, dass das Vorderfahrzeug (VF) eine Notbremsung (N) eingeleitet hat, auf das Folgefahrzeug (FF) (St2); wobei der Schritt des Ermittelns des dynamischen Fahrzeug-Abstandes (Adyn) es beinhaltet, dass ein Übertragungsweg zusätzlich berücksichtigt wird, wobei der Übertragungsweg (s) den zurückgelegten Weg des Folgefahrzeuges (FF) zwischen der Einleitung einer Notbremsung (N) **durch** das Vorderfahrzeug (VF) und der Einleitung einer Notbremsung (N) **durch** das Folgefahrzeug (FF) angibt, wobei der Übertragungsweg (s) abhängig ist von der aktuellen Übertragungszeit (t1, t2, t3), die aus einer Absendezeit, zu der das V2V-Signal (S1) von dem Vorderfahrzeug (VF) abgesendet wurde, und einer Empfangszeit, zu der das V2V-Signal (S1) auf dem Folgefahrzeug (FF) empfangen wird, berechnet wird, wobei die Absendezeit in Form eines Zeitstempels in dem V2V-Signal enthalten ist, und, wobei zur Bestimmung des Übertragungsweges (s) neben der Übertragungszeit (t1, t2, t3) zusätzlich eine Totzeit (tT) und eine Ansprechzeit (tS) berücksichtigt werden, wobei die Totzeit (tT) der Zeit zur Verarbeitung der übermittelten V2V-Signale und zur Ausgabe einer Bremsanforderung auf dem Folgefahrzeug entspricht und, wobei die Ansprechzeit (tS) der Zeit ab der Ausgabe der Bremsanforderung bis an den Bremsen des Folgefahrzeuges tatsächlich ein Bremsdruck aufgebaut wird, entspricht.

**2.** Verfahren nach Anspruch 1, **dadurch gekennzeichnet, dass** der dynamische Fahrzeug-Abstand (Adyn) aus einer im Folgefahrzeug (FF) hinterlegten Abstands-Kurve (K_Adyn) folgt, die für den ermittelten Übertragungsweg (s) den Zusammenhang zwischen der Verzögerungs-Differenz (dzMax) und dem dynamischen Fahrzeug-Abstand (Adyn) angibt.

**3.** Verfahren nach einem der vorhergehenden Ansprüche, **dadurch gekennzeichnet, dass** die aktuelle maximale Vorderfahrzeug-Verzögerung (zMax_VF) des Vorderfahrzeuges (VF) über das V2V-Signal (S1) vom Vorderfahrzeug (VF) auf das Folgefahrzeug (FF) übertragen wird.

**4.** Verfahren nach Anspruch 3, **dadurch gekennzeichnet, dass** die aktuelle maximale Vorderfahrzeug-Verzögerung (zMax_VF) vom Vorderfahrzeug (VF) ermittelt wird.

**5.** Verfahren nach einem der vorhergehenden Ansprüche, **dadurch gekennzeichnet, dass** falls das Vorderfahrzeug (VF) keine maximale Vorderfahrzeug-Verzögerung (zMax_VF) über das V2V-Signal (S1) überträgt oder aktuell kein V2V-Signal (S1) übertragen wird als aktuelle maximale Vorderfahrzeug-Verzögerung (zMax_VF) ein üblicher Wert für die Vorderfahrzeug-Verzögerung (zMax_VF) oder die zuletzt übertragene maximale Vorderfahrzeug-Verzögerung (zMax_VF) angenommen wird.

**6.** Verfahren nach einem der vorhergehenden Ansprüche, **dadurch gekennzeichnet, dass** als aktuelle Übertragungszeit eine erste Übertragungszeit (t1) aus einer Absendezeit (tA) zu der das V2V-Signal (S1) von dem Vorderfahrzeug (VF) abgesendet wird, und einer Empfangszeit (tE), zu der das V2V-Signal (S1) auf dem Folgefahrzeug (FF) empfangen wird, ermittelt wird.

**7.** Verfahren nach einem der vorhergehenden Ansprüche, **dadurch gekennzeichnet, dass** falls eine Bestimmung der ersten Übertragungszeit (t1) aus der Übertragung des V2V-Signals (S1) nicht möglich ist,

- die zuletzt ermittelte erste Übertragungszeit (t1) als aktuelle Übertragungszeit angenommen wird, oder
- als Übertragungszeit eine zweite Übertragungszeit (t2) ermittelt wird, die die Zeit zum Erzeugen und Erkennen eines von einer VLC-Lichtquelle (60) ausgegebenen optischen Warnsignals (SW) charakterisiert, oder
- als Übertragungszeit eine dritte Übertragungszeit (t3) ermittelt wird, die die Zeit zum Erkennen einer sich ändernden Relativgeschwindigkeit (dvRel) durch eine Abstandssensorik (70) charakterisiert.

**8.** Verfahren nach einem der vorhergehenden Ansprüche, **dadurch gekennzeichnet, dass** die maximale Folgefahrzeug-Verzögerung (zMax_FF) vom Folgefahrzeug (FF) ermittelt wird.

**9.** Verfahren nach einem der vorhergehenden Ansprüche, **dadurch gekennzeichnet, dass** der ermittelte dynamische Fahrzeug-Abstand (Adyn) zwischen dem Vorderfahrzeug (VF) und dem Folgefahrzeug (FF) durch Ansteuern von Bremsen und/oder eines Antriebs des Folgefahrzeuges (FF) eingestellt wird.

**10.** Steuereinrichtung (110) zum Ermitteln eines dynamischen Fahrzeug-Abstandes (Adyn) in einem Folgefahrzeug (FF) eines Platoons (100), **dadurch gekennzeichnet, dass** die Steuereinrichtung eingerichtet ist zur Durchführung eines Verfahrens nach einem der vorhergehenden Ansprüche.

**11.** Folgefahrzeug (20, 30, 40), insbesondere Nutzfahrzeug (10, 20, 30), **dadurch gekennzeichnet, dass** das Folgefahrzeug (FF) mit einer Steuereinrichtung (110) nach Anspruch 10 ausgestattet ist.

## Claims

1. Method for determining a dynamic vehicle distance (Adyn) between a following vehicle (FF) and a preceding vehicle (VF) of a platoon (100), a V2V signal (S1) being transmitted wirelessly between the following vehicle (FF) and the preceding vehicle (VF), the method comprising at least the following steps:

   - determining a current maximum following vehicle deceleration (zMax_FF) of the following vehicle (FF) (St1);
   - determining a current maximum preceding vehicle deceleration (zMax_VF) of the preceding vehicle (VF) (St3);
   - determining the dynamic vehicle distance (Adyn) in the following vehicle (FF) from a braking distance difference (sB) (St4), the braking distance difference (sB) indicating a difference between a preceding vehicle braking distance (w_VF) specified by the maximum preceding vehicle deceleration (zMax_VV) and a following vehicle braking distance (w_FF) specified by the maximum following vehicle deceleration (zMax_FF);

   **characterized by** the step of

   - determining a current transmission time (t1, t2, t3) for transmitting the information that the preceding vehicle (VF) has initiated an emergency braking process (N) to the following vehicle (FF) (St2); the step of determining the dynamic vehicle distance (Adyn) including additionally taking a transmission path into account, the transmission path (s) indicating the traveled path of the following vehicle (FF) between the initiation of an emergency braking process (N) by the preceding vehicle (VF) and the initiation of an emergency braking process (N) by the following vehicle (FF), the transmission path (s) being dependent on the current transmission time (t1, t2, t3) calculated from a time of sending, at which the V2V signal (S1) was sent by the preceding vehicle (VF), and a time of receipt, at which the V2V signal (S1) is received at the following vehicle (FF), the time of sending being contained in the V2V signal in the form of a time stamp, and a dead time (tT) and a response time (tS) additionally being taken into account, in addition to the transmission time (t1, t2, t3), in order to ascertain the transmission path (s), the dead time (tT) corresponding to the time for processing the transmitted V2V signals and outputting a brake request to the following vehicle, and the request time (tS) corresponding to the time from the output of the brake request until a braking pressure is actually built up at the brakes of the following vehicle.

2. Method according to claim 1, **characterized in that** the dynamic vehicle distance (Adyn) results from a distance curve (K_Adyn) stored in the following vehicle (FF), which distance curve indicates the relationship between the deceleration difference (dzMax) and the dynamic vehicle distance (Adyn) for the determined transmission path (s).

3. Method according to any of the preceding claims, **characterized in that** the current maximum preceding vehicle deceleration (zMax_VF) of the preceding vehicle (VF) is transmitted from the preceding vehicle (VF) to the following vehicle (FF) by means of the V2V signal (S1).

4. Method according to claim 3, **characterized in that** the current maximum preceding vehicle deceleration (zMax_VF) is determined by the preceding vehicle (VF).

5. Method according to any of the preceding claims, **characterized in that** if the preceding vehicle (VF) does not transmit a maximum preceding vehicle deceleration (zMax_VF) by means of the V2V signal (S1), or no V2V signal (S1) is currently being transmitted, a typical value for the preceding vehicle deceleration (zMax_VF) or the last transmitted maximum preceding vehicle deceleration (zMax_VF) is assumed as the current maximum preceding vehicle deceleration (zMax_VF).

6. Method according to any of the preceding claims, **characterized in that,** as a current transmission time, a first transmission time (t1) is determined from a time of sending (tA), at which the V2V signal (S1) is sent by the preceding vehicle (VF), and a time of receipt (tE), at which the V2V signal (S1) is received at the following vehicle (FF).

7. Method according to any of the preceding claims, **characterized in that** if it is not possible to ascertain the first transmission time (t1) from the transmission of the V2V signal (S1),

   - the last determined first transmission time (t1) is assumed to be the current transmission time, or
   - a second transmission time (t2) which characterizes the time for generating and detecting an optical warning signal (SW) output by a VLC light source (60) is determined as a transmission time, or
   - a third transmission time (t3) which characterizes the time for detecting a changing relative speed (dvRel) by means of a distance sensor system (70) is determined as a transmission time.

8. Method according to any of the preceding claims, **characterized in that** the maximum following vehicle deceleration (zMax_FF) is determined by the following vehicle (FF).

9. Method according to any of the preceding claims, **characterized in that** the determined dynamic vehicle distance (Adyn) between the preceding vehicle (VF) and the following vehicle (FF) is implemented by actuating brakes and/or a drive of the following vehicle (FF).

10. Control device (110) for determining a dynamic vehicle distance (Adyn) in a following vehicle (FF) of a platoon (100), **characterized in that** the control device is designed to carry out a method according to any of the preceding claims.

11. Following vehicle (20, 30, 40), in particular a commercial vehicle (10, 20, 30), **characterized in that** the following vehicle (FF) is equipped with a control device (110) according to claim 10.

## Revendications

1. Procédé permettant de déterminer une distance entre véhicules dynamique (Adyn) entre un véhicule qui suit (FF) et un véhicule qui précède (VF) d'un peloton (100), dans lequel un signal V2V (S1) est transmis sans fil entre le véhicule qui suit (FF) et le véhicule qui précède (VF), comportant au moins les étapes suivantes :

   - détermination d'une décélération maximale actuelle de véhicule qui suit (zMax_FF) du véhicule qui suit (FF) (St1) ;
   - détermination d'une décélération maximale actuelle de véhicule qui précède (zMax_VF) du véhicule qui précède (VF) (St3) ;
   - détermination de la distance entre véhicules dynamique (Adyn) dans le véhicule qui suit (FF) à partir d'une différence de trajet de freinage (sB) (St4), dans lequel la différence de trajet de freinage (sB) indique une différence entre un trajet de freinage de véhicule qui précède (w_VF) prédéfini par la décélération maximale de véhicule qui précède (zMax_W) et un trajet de freinage de véhicule qui suit (w_FF) prédéfini par la décélération maximale de véhicule qui suit (zMax_FF) ;

   **caractérisé par** l'étape consistant à

   - déterminer un temps de transmission (t1, t2, t3) actuel permettant de transmettre l'information selon laquelle le véhicule qui précède (VF) a amorcé un freinage d'urgence (N) au véhicule qui suit (FF) (St2) ; dans lequel l'étape de détermination de la distance entre véhicules dynamique (Adyn) comprend le fait qu'un trajet de transmission est en outre pris en compte, dans lequel le trajet de transmission (s) indique le trajet parcouru par le véhicule qui suit (FF) entre l'amorce d'un freinage d'urgence (N) par le véhicule qui précède (VF) et l'amorce d'un freinage d'urgence (N) par le véhicule qui suit (FF), dans lequel le trajet de transmission (s) dépend du temps de transmission (t1, t2, t3) actuel qui est calculé à partir d'un moment d'émission auquel le signal V2V (S1) a été émis par le véhicule qui précède (VF) et d'un moment de réception auquel le signal V2V (S1) est reçu par le véhicule qui suit (FF), dans lequel le moment d'émission est contenu dans le signal V2V sous la forme d'une estampille temporelle, et dans lequel, pour la définition du trajet de transmission (s), en plus du temps de transmission (t1, t2, t3), un temps mort (tT) et un temps de réponse (tS) sont en outre pris en compte, dans lequel le temps mort (tT) correspond au temps permettant de traiter les signaux V2V transmis et permettant d'envoyer une demande de freinage au véhicule qui suit, et dans lequel le temps de réponse (tS) correspond au temps écoulé depuis l'envoi de la demande de freinage jusqu'à ce qu'une pression de freinage soit effectivement établie sur les freins du véhicule qui suit.

2. Procédé selon la revendication 1, **caractérisé en ce que** la distance entre véhicules dynamique (Adyn) résulte d'une courbe de distance (K_Adyn) mémorisée dans le véhicule qui suit (FF), laquelle courbe de distance indique la relation entre la différence de décélération (dzMax) et la distance entre véhicules dynamique (Adyn) pour le trajet de transmission (s) déterminé.

3. Procédé selon l'une des revendications précédentes, **caractérisé en ce que** la décélération maximale actuelle de véhicule qui précède (zMax_VF) du véhicule qui précède (VF) est transmise depuis le véhicule qui précède (VF) au véhicule qui suit (FF) par l'intermédiaire du signal V2V (S1).

4. Procédé selon la revendication 3, **caractérisé en ce que** la décélération maximale actuelle de véhicule qui précède (zMax_VF) est déterminée par le véhicule qui précède (VF).

5. Procédé selon l'une des revendications précédentes,
**caractérisé en ce que,** si le véhicule qui précède (VF) ne transmet pas de décélération maximale de véhicule qui précède (zMax_VF) par l'intermédiaire du signal V2V (S1), ou si aucun signal V2V (S1) n'est actuellement transmis, une valeur usuelle pour la décélération de véhicule qui précède (zMax_VF) ou la décélération maximale de véhicule qui précède (zMax_VF) transmise en dernier est considérée comme décélération maximale actuelle de véhicule qui précède (zMax_VF).

6. Procédé selon l'une des revendications précédentes,
**caractérisé en ce qu**'un premier temps de transmission (t1) est déterminé comme temps de transmission actuel à partir d'un moment d'émission (tA) auquel le signal V2V (S1) est émis par le véhicule qui précède (VF) et d'un moment de réception (tE) auquel le signal V2V (S1) est reçu par le véhicule qui suit (FF).

7. Procédé selon l'une des revendications précédentes,
**caractérisé en ce que,** si une définition du premier temps de transmission (t1) à partir de la transmission du signal V2V (S1) n'est pas possible,

- le premier temps de transmission (t1) déterminé en dernier est considéré comme temps de transmission actuel, ou
- un deuxième temps de transmission (t2) est déterminé comme temps de transmission, lequel deuxième temps de transmission caractérise le temps permettant d'obtenir et de reconnaître un signal avertisseur optique (SW) envoyé par une source lumineuse VLC (60), ou
- un troisième temps de transmission (t3) est déterminé comme temps de transmission, lequel troisième temps de transmission caractérise le temps permettant de reconnaître une vitesse relative (dvRel) qui varie par un système de capteurs de distance (70).

8. Procédé selon l'une des revendications précédentes,
**caractérisé en ce que** la décélération maximale de véhicule qui suit (zMax_FF) est déterminée par le véhicule qui suit (FF).

9. Procédé selon l'une des revendications précédentes,
**caractérisé en ce que** la distance entre véhicules dynamique (Adyn) déterminée entre le véhicule qui précède (VF) et le véhicule qui suit (FF) est réglée par une commande de freins et/ou d'un entraînement du véhicule qui suit (FF).

10. Dispositif de commande (110) permettant de déterminer une distance entre véhicules dynamique (Adyn) dans un véhicule qui suit (FF) d'un peloton (100), **caractérisé en ce que** le dispositif de commande est configuré pour exécuter un procédé selon l'une des revendications précédentes.

11. Véhicule qui suit (20, 30, 40), en particulier véhicule utilitaire (10, 20, 30), **caractérisé en ce que** le véhicule qui suit (FF) est équipé d'un dispositif de commande (110) selon la revendication 10.

100
Fig. 1
50
50
50
10
20
30
40
VF
FF, VF
FF, VF
FF

s
sB
VF
SW
FF
60
Adyn
70
90
80
zMax_VF
(mue_VF, ZB_VF,
VB_VF, W)
zMax_FF
(mue_FF, ZB_FF,
VB_FF, W)
w_VF
dvRel
w_FF
Fig. 2
S1(v_FF, v_VF, Adyn, N)

Adyn
K_Adyn
s
0
dzMax

Fig. 3

v_VF, v_FF
K_VF
K_FF
s
sB1
sB2
sB3
t
sB

Fig. 4

St0
zMax_FF
St1
ta,t1
(tA, tE, tT, tS)
St2
zMax_VF
St3
Adyn
(s, dzMax)
St4
N

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102010013647 A1
- WO 2016134770 A1